# EUROPEAN PATENT SPECIFICATION

(11) **EP 3 662 721 B1**
(45) Date of publication and mention of the grant of the patent: **11.02.2026**
(21) Application number: 18846536.3
(22) Date of filing: 14.08.2018
(51) Int. Cl.: H04W 76/27, H04W 28/02

(54) **METHOD AND SYSTEM FOR HANDLING PACKET DUPLICATION AND RESUMPTION OF RBS IN WIRELESS COMMUNICATION SYSTEM**
VERFAHREN UND SYSTEM ZUR HANDHABUNG VON PAKETDUPLIZIERUNG UND WIEDERAUFNAHME VON RBS IN EINEM DRAHTLOSEN KOMMUNIKATIONSSYSTEM
PROCÉDÉ ET SYSTÈME DE GESTION DE DUPLICATION DE PAQUETS ET DE REPRISE DE RB DANS UN SYSTÈME DE COMMUNICATION SANS FIL

(30) Priority: 14.08.2017 IN 201741028923; 10.08.2018 IN 201741028923
(43) Date of publication of application: 10.06.2020
(73) Proprietor: Samsung Electronics Co., Ltd., Suwon-si, Gyeonggi-do 16677 (KR)
(72) Inventor: SHARMA, Neha, Bangalore 560037, Karnataka (IN); LATHEEF, Fasil Abdul, Bangalore 560037, Karnataka (IN); BAEK, Sang-Kyu, Suwon-si, Gyeonggi-do, 16677 (KR)
(74) Representative: Gulde & Partner
(86) International application number: PCT/KR2018/009349
(87) International publication number: WO 2019/035645

(56) References cited:
- US-A1- 2013 260 740
- US-A1- 2015 312 892
- US-A1- 2016 353 511
- US-A1- 2017 223 755
- HUAWEI ET AL: "Consideration on the procedure design for RRC resume and RRC reestablishment", vol. RAN WG2, no. Hangzhou, China; 20170515 - 20170519, 14 May 2017 (2017-05-14), XP051275384, Retrieved from the Internet <URL:http://www.3gpp.org/ftp/Meetings_3GPP_SYNC/RAN2/Docs/> [retrieved on 20170514]
- HUAWEI ET AL: "Discussion on RRC Connection Suspension and Resumption", vol. RAN WG2, no. Budapest, HU; 20160119 - 20160121, 13 January 2016 (2016-01-13), XP051066449, Retrieved from the Internet <URL:http://www.3gpp.org/ftp/tsg_ran/WG2_RL2/TSGR2_AHs/2016_01_LTE_NB_IoT/Docs/> [retrieved on 20160113]
- ERICSSON: "Harmonizing of the RRCConnection, Reestablishment and Resume procedures", vol. RAN WG2, no. Qingdao; 20170627 - 20170629, 26 June 2017 (2017-06-26), XP051301780, Retrieved from the Internet <URL:http://www.3gpp.org/ftp/Meetings_3GPP_SYNC/RAN2/Docs/> [retrieved on 20170626]
- LG ELECTRONICS: "Enhanced RRC Connection Re-establishment in NR", R2-1709455, 3GPP TSG-RAN WG2 MEETING #99, 11 August 2017 (2017-08-11), Berlin, Germany, XP051319184
- INTEL CORPORATION: "Security handling for resumption, re-establishment and handover", R2-1708803, 3GPP TSG-RAN WG2 MEETING #99, 12 August 2017 (2017-08-12), Berlin, Germany, XP051318607

## Description

### [Technical Field]

The present disclosure relates to a method and system for handling packet duplication and resumption of Radio Bearers (RBs) in a wireless communication system.

### [Background Art]

In the recent years several broadband wireless technologies have been developed to meet the growing number of broadband subscribers and to provide more and better applications and services. Second generation wireless communication system has been developed to provide voice services while ensuring the mobility of users. Third generation wireless communication system supports not only the voice service but also a data service. In recent years, fourth wireless communication system has been developed to provide high-speed data service. However, currently, the fourth generation wireless communication system suffers from lack of resources to meet the growing demand for high speed data services, so that fifth generation wireless communication system is being developed to meet the growing demand for high speed data services, support ultra-reliability and low latency applications.

The fifth generation wireless communication system will be implemented not only in lower frequency bands but also in higher frequency (mmWave) bands, e.g., 10 GHz to 100 GHz bands, so as to accomplish higher data rates. In order to mitigate propagation loss of radio waves and increase the transmission distance, beamforming, massive Multiple-Input Multiple-Output (MIMO), Full Dimensional MIMO (FD-MIMO), array antenna, an analog beam forming, large scale antenna techniques are being considered in the design of the fifth generation wireless communication system. In addition, the fifth generation wireless communication system is expected to address different use cases having quite different requirements in terms of data rate, latency, reliability, mobility etc. However, it is expected that a design of an air-interface of the fifth generation wireless communication system would be flexible enough to serve User Equipment's (UEs) having quite different capabilities depending on the use case and market segment the UE cater service to an end customer. Few example use cases, the fifth generation wireless communication system is expected to address the enhanced Mobile Broadband (eMBB), massive Machine Type Communication (m-MTC), ultra-reliable low latency communication (URLL) etc. The eMBB requirements like tens of Gbps data rate, low latency, high mobility so on and so forth address the market segment representing the conventional wireless broadband subscribers needing internet connectivity everywhere, all the time and on the go. The m-MTC requirements like very high connection density, infrequent data transmission, very long battery life, low mobility address so on and so forth address the market segment representing the Internet of Things (IoT)/Internet of Everything (IoE) envisioning connectivity of billions of devices. The URLL requirements like very low latency, very high reliability and variable mobility so on and so forth address the market segment representing the Industrial automation application, vehicle-to-vehicle/vehicle-to-infrastructure communication foreseen as one of the enabler for autonomous cars.

In the fourth generation wireless communication systems, the UE in a connected state communicates with an Enhanced Node B (eNB). A radio protocol stack for communication between the UE and the eNB comprises of Packet Data Convergence Protocol (PDCP), Radio link control (RLC), Medium Access Control (MAC) and Physical (PHY) sub layers. One or more data radio bearers (DRBs) are established between the UE and the eNB for exchanging user plane packets. Each DRB is associated with one PDCP entity and one or more RLC entities. Each DRB is associated with a logical channel in the MAC sub layer and there is one MAC entity in the UE for the eNB.

The main services and functions of the MAC sublayer include: mapping between logical channels and transport channels, Multiplexing/de-multiplexing of MAC Service Data Unit (SDUs) belonging to one or different logical channels into/from transport blocks (TB) delivered to/from the physical layer on the transport channels, scheduling information reporting, error correction through a Hybrid automatic repeat request (HARQ), priority handling between the logical channels of one UE, priority handling between the UEs by means of dynamic scheduling, transport format selection and padding.

The main services and functions of the RLC sublayer include: transfer of upper layer PDUs, error correction through ARQ (only for Acknowledged Mode (AM) data transfer), concatenation, segmentation and reassembly of RLC SDUs (only for Un-acknowledgement Mode (UM) and AM data transfer), re-segmentation of the RLC data PDUs (only for the AM data transfer), reordering of the RLC data PDUs (only for the UM and AM data transfer), duplicate detection (only for the UM and AM data transfer), protocol error detection (only for the AM data transfer), the RLC SDU discard (only for the UM and AM data transfer), and RLC re-establishment.

The main services and functions of the PDCP sublayer for the user plane include: header compression and decompression: Robust Header Compression (ROHC) only, transfer of user data, in-sequence delivery of the upper layer PDUs at PDCP re-establishment procedure for RLC AM, For split bearers in a dual connectivity (DC) (only support for the RLC AM): PDCP PDU routing for transmission and PDCP PDU reordering for reception, duplicate detection of the lower layer SDUs at the PDCP re-establishment procedure for the RLC AM, retransmission of the PDCP SDUs at handover and, for split bearers in DC, of PDCP PDUs at PDCP data-recovery procedure, for RLC AM, ciphering and deciphering, and timer-based SDU discard in an uplink (UL). Functions of the PDCP sub layer are performed by the PDCP entities. Each PDCP entity carries the data of one radio bearer. Due to the UE mobility, the UE may handover from one eNB to another eNB. In dual connectivity (DC) mode of operation due to the UE mobility, the UE may handover from one master eNB (MeNB) to another MeNB or SCG change from one secondary eNB (SeNB) to another SeNB. The eNB may support multiple cells and the UE may also handover from one cell to another cell of same eNB.

Multi-RAT Dual Connectivity (MR-DC) is a generalization of an Intra-E-UTRA Dual Connectivity (DC) described in the 3^{rd} Generation Partnership Project (3GPP) TS 36.300, where multiple Rx/Tx UE may be configured to utilize radio resources provided by two distinct schedulers in two different nodes connected via a non-ideal backhaul, one providing Evolved Universal Terrestrial Radio Access (E-UTRA) access and the other one providing NR access. One scheduler is located in a Maser Node (MN) and the other scheduler is located in a secondary node (SN). The MN and SN are connected via a network interface and at least the MN is connected to a core network. As mentioned in 3GPP TS 37.340, the E-UTRAN supports MR-DC via an E-UTRA-NR Dual Connectivity (EN-DC), in which the UE is connected to one eNB that acts as the MN and one gNB that acts as the SN. The eNB is connected to an Evolved Packet Core (EPC) and the gNB is connected to the eNB via an X2 interface. The NG-RAN supports the NG-RAN E-UTRA-NR Dual Connectivity (NGEN-DC), in which the UE is connected to one eNB that acts as the MN and one gNB that acts as the SN. The eNB is connected to a 5G Core Network (5GC) and the gNB is connected to the eNB via an Xn interface. The NG-RAN supports the NR-E-UTRA Dual Connectivity (NE-DC), in which the UE is connected to one gNB that acts as the MN and one eNB that acts as the SN. The gNB is connected to the 5GC and the eNB is connected to the gNB via the Xn interface. In MR-DC, the UE has a single RRC state, based on the MN RRC and a single C-plane connection towards the core network. Each radio node has its own RRC entity (E-UTRA version if the node is the eNB or NR version if the node is a gNB) which can generate RRC PDUs to be sent to the UE. The RRC PDUs generated by the SN can be transported via the MN to the UE. The MN always sends the initial SN RRC configuration via a Master Cell Group Signaling Radio Bearer (MCG SRB), but subsequent reconfigurations may be transported via the MN or the SN. When transporting RRC PDU from the SN, the MN does not modify the UE configuration provided by the SN. In MR-DC, the radio protocol architecture that a particular radio bearer uses depends on how the radio bearer is setup. Four bearer types exist: MCG bearer, MCG split bearer, SCG bearer and SCG split bearer. These four bearer types are for MR-DC with EPC (EN-DC) and for MR-DC with 5GC (NGEN-DC, NE-DC). When the EN-DC is configured, the network (NW) can configure MCG bearer either with LTE PDCP or NR PDCP configuration.

Thus, it is desired to address the above mentioned disadvantages or other shortcomings or at least provide a useful alternative.

HUAWEI ET AL: "Consideration on the 1-12 procedure design for RRC resume and RRC reestablishment", 3GPP DRAFT; R2-1704869 relates to optimization of RRC re-establishment procedure, and discusses the possibility of having common design for RRC re-activation of INACTIVE UE and the RRC reestablishment.

Another example of the prior art can be found in US2015312892.

### [Disclosure of Invention]

### [Solution to Problem]

Accordingly, the embodiment herein provides methods for performing a wireless communication by a user equipment and a base station, respectively, as defined by the appended set of claims. Further, the embodiment further provides a user equipment and a base station for performing a wireless communication as defined by the appended set of claims.

### [Brief Description of Drawings]

This method is illustrated in the accompanying drawings, throughout which like reference letters indicate corresponding parts in the various figures. The embodiments herein will be better understood from the following description with reference to the drawings, in which:
FIG. 1 is a sequence diagram illustrating a two-step procedure for RB-reestablishment, according to an prior art;
FIG. 2 is a sequence diagram illustrating a RB-establishment in a the wireless communication system using a single step procedure, according to an embodiment as disclosed herein;
FIG. 3 is a sequence diagram illustrating behavior of a UE during RRC connection reestablishment procedure, according to an prior art;
FIG. 4 illustrates a sequence diagram for handling RRC connection re-establishment failure, according to an embodiment as disclosed herein;
FIG. 5a illustrates a sub-header for identifying a duplicate buffer occupancy CE, according to an embodiment as disclosed herein;
FIG. 5b illustrates a MAC CE indicating buffer occupancy due to duplicate PDCP PDUs along with a Logical Channel Group (LCG) to which the logical channel is configured, according to an embodiment as disclosed herein;
FIG. 5c illustrates the MAC CE indicating buffer occupancy due to duplicate PDCP PDUs without indicating LCG it is configured with, according to an embodiment as disclosed herein;
FIG. 6 illustrates variable sized MAC CE to indicate the amount of duplicate PDUs per CC configured to carry duplicate PDUs, according to an embodiment as disclosed herein;
FIG. 7 illustrates MAC CE indicating bitmap of component carrier having pending uplink transmission of PDCP duplicate PDUs, according to an embodiment as disclosed herein;
FIG. 8 is a block diagram of a base station, according to an embodiment as disclosed herein;
FIG. 9 is a block diagram of the UE, according to an embodiment as disclosed herein;
FIG. 10 and FIG. 11 are flow diagram illustrating various operations, implemented by the base station, for handling packet duplication and resumption of RBs, in the wireless communication system, according to an embodiment as disclosed herein; and
FIG. 12 to FIG. 16 are flow diagram illustrating various operations, implemented by the UE, for handling packet duplication and resumption of RBs, in the wireless communication system, according to an embodiment as disclosed herein.

### Mode for the Invention

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits, or the like, and may optionally be driven by firmware and software. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the invention. Likewise, the blocks of the embodiments may be physically combined into more complex blocks without departing from the scope of the invention
The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. Although the terms first, second, etc. may be used herein to describe various elements, these elements should not be limited by these terms. These terms are generally only used to distinguish one element from another.

Accordingly, the embodiment herein provides a method for handling packet duplication and resumption of Radio Bearers (RBs) in a wireless communication system. The method includes receiving, by a base station, a Radio Resource Control (RRC) connection reestablishment request message from a User Equipment (UE). Further, the method includes sending, by the base station, a RRC connection reestablishment message on a default Signaling Radio Bearer (SRB) to the UE. The RRC connection reestablishment message is sent on the default SRB for allowing a re-establishment of Dedicated Radio Bearers (DRBs), first SRB, and a second SRB without waiting for reception of a RRC reestablishment complete message from the UE. Further, the method includes receiving, by the base station, the RRC reestablishment complete message from the UE.

Unlike conventional methods and systems, the proposed method can be used to handle duplicate reordering and data volume calculation in a LTE-NR interworking system in an effective manner.

In the proposed methods, various embodiment are adopted in the standard 3GPP TS 38.323, 38.331, and 38.321.

The embodiments herein achieve duplicate reordering in an EN-DC, wherein, in a LTE network, reordering function takes place at a RLC layer for UM and AM data transfer. The reordering function at the RLC layer ensures that the reordering function provides in-sequence delivery to the upper layers. In order to detect the loss of UMD and AMD PDUs at lower layers and avoid excessive reordering delays, a t-reordering timer is configured by a network (NW) which is maximum time to wait for reception of the RLC PDU that have not been received in sequence. Whenever the UM and AM RLC entity received out of sequence UMD and AMD data PDU at reception side it starts reordering timer i.e. t-reordering and it waits for RLC PDU until the timer expires.

In case of a RLC AM entity once t-reordering timer expires, if the UE 100 receives a missing AMD PDU, then the RLC AM entity reassembles the RLC SDUs from the reordered RLC data PDUs and delivers the RLC SDUs to upper layer in sequence, if SN= VR(R), where SN is the sequence number of the received protocol data unit (PDU) and VR(R) is the RLC state variable holding the last successfully received PDU. This means that the RLC AM entity only delivers the packets to the upper layers, when the RLC AM entity receives the missing packets.

In case of RLC UM entity once t-reordering timer expires, the LTE RLC UM entity needs to deliver the received RLC SDUs to the upper layers despite the lost PDUs. The RLC entity reassembles RLC SDUs from any UMD PDUs with SN < updated VR(UR), and delivers the reassembled RLC SDUs to the upper layer in ascending order of the RLC SN if not delivered before. Due to this the RLC UM entity can deliver out of sequence packets to the upper layers.

In LTE PDCP reordering is introduced for DRBs mapped on the RLC AM entity to handle special cases like re-establishment, handover or the NW 200 configures split bearers in DC or LTE-WLAN aggregation (LWA) bearers. In these cases, the RLC AM entity provides an out of sequence delivery, so that a PDCP layer performs reordering during reception of the PDU and ensures in sequence delivery to the upper layers. In the LTE, the PDCP reordering is not performed for DRBs mapped on the RLC UM entity.

In 3GPP, a fifth generation system reordering concept is introduced at the PDCP instead of the RLC to reduce the latency. A NR RLC is not performing any reordering procedure for both AM and UM entity as a NR PDCP is taking care of reordering functionality. The PDCP PDUs can be delivered out-of-order from the NR RLC to the NR PDCP. The NR RLC delivers the PDCP PDUs to the PDCP, after the PDU is reassembled and also agreed that PDCP reordering is always enabled, if in sequence delivery to layers above PDCP is needed (i.e. even in a non-DC case).

In an EN-DC, when a MCG DRB is configured with the NR PDCP, then the UE MCG bearer will be configured with NR PDCP container and have LTE configurations on the RLC, MAC and physical layers. In this case reordering function available at both LTE RLC and NR PDCP layers.

Any AMD PDU that are missed or received out of order is reordered by the reordering function at the LTE RLC entity and are delivered in-sequence to the NR PDCP. So there is no case where the PDCP reordering timer will be started except during handover and re-establishment cases where the RLC can provide out-of-sequence delivery of RLC SDUs to higher layers. As mentioned above, the LTE RLC UM entity can provide the out-of-sequence delivery of RLC SDUs to the higher layers. If the NR PDCP reordering is enabled then it will again start the reordering timer on receiving out of sequence packets from the LTE RLC entity. There is no further gain from performing reordering at the NR-PDCP again, as the LTE RLC entity has already wait for missing packets till t-reordering timer expiry. Reordering at the NR PDCP only adds to delay in delivering the packets to upper layers without any improvement to packet reordering/recovery. The duplicate reordering takes place at the LTE RLC and the NR PDCP.

For MCG DRB configured with NR PDCP and LTE RLC UM entity, the NW 200 should disable the reordering functionality either at LTE RLC entity or NR PDCP entity. Duplicate reordering at the NR PDCP and LTE RLC only adds to delay in delivering the packets to upper layers without any improvement to packet reordering/ recovery. Disabling the reordering at LTE RLC will not work as it may cause loss of packets and additional complexity may be introduce as current LTE RLC receive operation is designed with reordering functionality.

The issue in the EN-DC, when the MCG DRB is configured with the LTE RLC UM entity and the NR PDCP, then the NW 200 should disable the NR PDCP reordering. It is desirable to disable PDCP reordering, i.e. to support out-of-sequence delivery in the PDCP if lower layer already supports in-sequence delivery or reordering functionality. In EN-DC, when the MCG DRB is configured with the NR PDCP, then the NW 200 should configure the NR PDCP with out of order delivery, so that the PDCP delivers the resulting PDCP SDU to upper layers and should not start reordering functionality.

Further, the NW 200 can configure NR PDCP with t-reordering timer as 0ms, so that the PDCP delivers the resulting PDCP SDU to upper layers without reordering functionality. In non-DC case, the LTE RLC entity ensures that it provides the RLC SDUs in ascending order of the RLC SN, so there is no issue with respect to the SN handling at the PDCP.

In EN-DC, when the MCG DRB is configured with the NR PDCP, then the NW 200 can configure LTE RLC with t-reordering timer as 0ms, so that the PDCP PDUs can be delivered out-of-order from the RLC to the PDCP. The RLC delivers the PDCP PDUs to the PDCP after the PDU is reassembled and also PDCP reordering is always enabled if in sequence delivery to layers above PDCP is needed.

Data Volume calculation: 3GPP agreed that the RRC configured mapping of the 2 duplicate logical channels (LCHs) to different carriers will be supported (One carrier cannot have both of the duplicate LCHs mapped to it). Duplicated PDCP PDUs are submitted to two different RLC entities. 3GPP also agreed that which the logical channel is used for duplication leg based on the RRC configuration for the CA and the DC. In CA, after the duplication is deactivated, the logical channel to carrier mapping restriction is not applied. The UE 100 sends new data via one specified logical channel.

The buffer status reporting procedure is used to provide the network 200 with information about the amount of data available for transmission in the UL buffers associated with the MAC entity. The PDCP indicates to MAC entity about the data available for transmission which includes PDCP Control PDUs, SDUs which has not been processed by PDCP and the PDUs if the SDUs have been processed by the PDCP. The RLC indicates to the MAC entity about the data available for transmission which includes RLC Status PDU, RLC SDUs or segments that are not part of an RLC PDU and RLC PDUs that are pending for re-transmission.

In LTE DC, when the buffered data for uplink transmission is larger than the configured ul-DataSplitThreshold, the PDCP provides both MAC entities with the same data available for transmission. The thresholds are known to scheduler entities at both the network nodes and therefore can allocate resources efficiently. Both the eNBs do not provide grants required to transmit the complete buffer occupancy reported in the BSR (in order to avoid over scheduling) as the network 200 is aware that the same value of buffer occupancy is reported to both the eNBs but the actual PDU will be transmitted only to one of the eNBs.

In dual connectivity having uplink split bearer, a data threshold value is configured by the gNB based on which the data available for transmission will be indicated to the MAC entity. If Data Threshold is configured and the data available for transmission is larger than or equal to the data threshold, then the PDCP indicates the data available for transmission to both the MAC entity configured for SCG and the MAC entity configured for MCG. If data available for transmission is lesser than this the data threshold, then the PDCP indicates the data available for transmission to the specific MAC entity which is configured by upper layers to carry this information. The other MAC entity is indicated as 0 data available for transmission. If data threshold is not configured, then the PDCP indicates the data available for transmission only to a specific MAC entity. The MAC entity to which PDCP data available for transmission has to be indicated should be configured by the gNB. The NR PDCP should be configured with the MAC entity to which PDCP should indicate data available for transmission when the data volume is not above a configured data threshold value. Therefore, in the proposed method, in the MR-DC and the intra-NR DC, for uplink split bearer when the packet duplication is not enabled, upper layers shall configure the MAC entity to which PDCP should indicate the data available for transmission. Additionally, in MR-DC and intra-NR DC, for uplink split bearer when packet duplication is not enabled, the PDCP should indicate the data available for transmission to both MAC entities when the data available for transmission is larger than or equal to the configured data threshold.

The NR supports two types of PDCP packet duplication - DC case and CA case. In PDCP packet duplication for the MR-DC case, the bearer is configured with two RLC entities which are interfaced to separate MAC entities. In PDCP packet duplication for NR CA case, the bearer is configured with two RLC entities which are interfaced to a single common MAC entity. As a result, every PDCP SDU has 2 PDUs formed. The PDCP processes the SDUs and form PDUs that are submitted to RLC entity on one leg for uplink transmission. The same/duplicate PDCP PDUs are submitted to RLC entity on the other leg for uplink transmission. The NR PDCP ensures that the duplicated packets are submitted to separate legs of the split bearer. As a result, for a single PDCP SDU, there is data available for transmission over both the legs.

For both DC case and CA case with packet duplication enabled, the NR PDCP ensures that the duplicated packets are transmitted over separate logical channels and RLC entities (separate legs) that are configured for the uplink bearer. In CA based duplication, the MAC entity ensures that the packets from the two RLC entities submitting the duplicated packets are not multiplexed and transmitted over the same carrier. Therefore, they will be transmitted as part of different transport blocks over different carriers. It is required for the network to provide sufficient uplink grants on both the legs of the split bearer or over both the carriers in CA case, in order to transmit the duplicate PDUs. Therefore, the NR PDCP with packet duplication enabled should always indicate the same data available for transmission to both the MAC entities in order to receive uplink grant allocation over both the legs. In the proposed methods, in MR DC and intra-NR DC, with uplink split bearer, the NR PDCP shall indicate data available for transmission to both the MAC entities for bearers with PDCP PDU duplication enabled. Also in the CA case, the NR PDCP shall indicate data available for transmission over both the logical channels for bearers with PDCP PDU duplication enabled.

For devices supporting PDCP duplication in the NR, the UE 100 transmits the PDCP entity provides data available for transmission to the associated MAC entity in the following way:
For split bearers, when indicating the data volume to the MAC entity for BSR triggering and Buffer Size calculation, the UE shall:
- if the pdcpDuplication is configured and activated,
- indicate the data volume to both the MAC entity configured for SCG and the MAC entity configured for MCG;
- else
- if ul-DataSplitThreshold is configured and the data volume is larger than or equal to ul-DataSplitThreshold:
   - indicate the data volume to both the MAC entity configured for SCG and the MAC entity configured for MCG;
   - else:
      - if ul-DataSplit-ViaSCG is set to TRUE by upper layer:
      - indicate the data volume to the MAC entity configured for SCG only;
      - if ul-DataSplitThreshold is configured,
         indicate the data volume as 0 to the MAC entity configured for MCG;
      - else:
         - indicate the data volume to the MAC entity configured for MCG only;
         - if ul-DataSplitThreshold is configured, indicate the data volume as 0 to the MAC entity configured for SCG.

It has been agreed that when duplication is deactivated in the CA case, the UE 100 will send data only over one specified logical channel. When the duplicate logical channel is deactivated, it does not necessarily lead to release of the logical channel and associated RLC entity. These configuration may still be retained in order for faster re-activation when necessary. Therefore, the PDCP shall report the data available for transmission only once over the logical channel that is still active. When CA based duplication is deactivated, the PDCP shall send data available for transmission to the MAC entity only over the logical channel that is still active.

It was agreed that the MAC CE will be used for the control of uplink duplication. When duplication is deactivated for the bearer, the associated RLC entities may still have the SDUs from the duplicate PDCP PDUs that are not transmitted to the network 200. These packets will be continued to be transmitted to the network 200 as the RLC entity is active. However, since duplication is already deactivated, the network 200 does not require this pending packets to be transmitted as duplicate. Therefore, the data available for transmission at RLC entity on the leg which was configured for duplication has to be flushed and discarded from transmission.

For activation and deactivation of PDCP packet duplication, it was agreed that the MAC CE will be used for the control of uplink duplication. However, for CA based duplication, there is an RLC entity and associated logical channel configured to the UE only for carrying duplicated PDUs. When duplication is deactivated, there is no further need to maintain two RLC entities and logical channels for the same bearer. Therefore, network should indicate the UE to release or suspend the redundant configuration.

For devices supporting CA based PDCP duplication in the NR, the PDCP submits the data volume to the associated MAC entity in the following way:
For CA duplicated bearers, when indicating the data volume to the MAC entity for BSR triggering and Buffer Size calculation, the UE shall:
- if pdcpDuplication is configured and activated
- indicate the data volume to the MAC entity over both the RLC entities configured for duplication;
- else
- indicate the data volume to MAC entity over the RLC entity which is used for data transmission.

Enhancements to RRC connection re-establishment procedure: 3GPP has agreed that a failure of the MN RRC messages, including one encapsulating SN RRC message with or without any MN reconfiguration fields triggers a re-establishment procedure. It has also been agreed that if radio link failure is detected for MCG, the UE 100 initiates the RRC connection re-establishment procedure with the PCell. Also, if radio link failure is detected for the SCG, the UE 100 suspends all SCG radio bearers (including SCG split bearers) and the SCG transmissions for split radio bearers, and reports SCG failure information to MN.

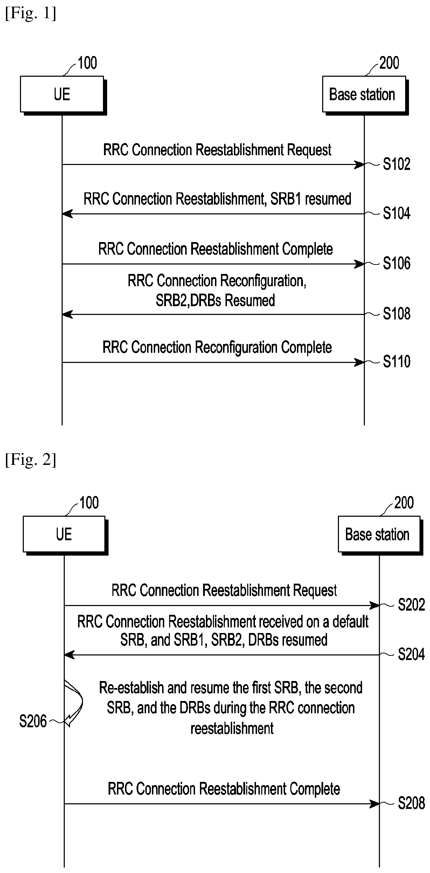

FIG. 1 is a sequence flow diagram illustrating two step procedure for a RB-reestablishment, according to prior art.

At S102, the UE 100 sends a RRC Connection Reestablishment Request message to the Base station 200 (e.g., EUTRAN or the like). At S104, The EUTRAN sends a RRC Connection Reestablishment message (i.e., RRC connection reestablishment response message) along with a SRB1 resumed to the UE 100. At S106, the UE 100 sends RRC connection reestablishment complete message to the EUTRAN. At S108, the EUTRAN sends RRC connection reconfiguration, SRB2, DRBs resumed to the UE 100. At S110, the UE 100 sends RRC connection reconfiguration complete to the EUTRAN.

In LTE, the RRC connection to the eNB fails due to several reasons like radio link failure, handover failure, integrity check failure, RRC connection reconfiguration failure, maximum RLC retransmissions, random access problems etc. In such cases, RRC connection re-establishment procedure is used to recover and resume the RRC connection if an Access Stratum (AS) security is activated for the connection. When re-establishment procedure is triggered, the UE 100 performs cell selection to the same or different cell and sends a RRC connection re-establishment request to the network 200. In response, the eNB resumes the operation of SRB1 and re-activates AS security (without changing the security algorithms) using the RRC connection re-establishment message. SRB2 and DRB(s) are not resumed during this time. The EUTRAN initiates re-establishment/ resumption of SRB2 and DRB(s) after having initiated the initial AS security activation. As a result, the SRB2 and the DRB(s) are not resumed during reestablishment. They are resumed subsequent signaling using the RRC connection reconfiguration. Therefore, in LTE, the resumption of operation of SRBs and DRB(s) during RLF recovery takes place in 2 steps. The SRB1 is resumed during reestablishment and SRB2 and DRB(s) are resumed using subsequent RRC reconfiguration as shown in the FIG 1.

FIG. 2 illustrates RB-establishment in NR using single step procedure, according to an embodiment as disclosed herein.

Faster Resumption of radio bearers in NR Re-establishment: The LTE is designed for mobile broadband use case and does not have a requirement to support low latency services like uRLLC. Therefore, a latency in recovering the RRC connection does not harm the service largely. However, same is not the case with the NR where it is required to support not only the eMBB use case but also the URLLC use case where low latency communication is required. In such cases, a faster RRC connection recovery and service resumption is preferred. A single RRC procedure to resume SRBs and DRBs should be supported to improve the latency of the RLF recovery. Therefore, SRB1, SRB2 and DRB(s) should re-establish and resume operation together during the RRC connection re-establishment procedure. In NR, the resumption of SRB1, SRB2 and DRB(s) during RLF recovery should take place in one step. All these radio bearers should be resumed during RRC connection re-establishment procedure as illustrated in the FIG 2.

As shown in the FIG. 2, at S202, the UE 100 sends the RRC connection reestablishment request message to the base station 200. At S204, the UE 100 receives the RRC connection reestablishment message from the base station. The RRC connection reestablishment message is received on the default SRB (SRB0) with an intention to allow a re-establishment of DRBs, the first SRB, and a second SRB prior to sending a RRC re-establishment complete message from the UE 100. At S208, UE 100 reestablishes and resumes the first SRB, the second SRB, and the DRBs as configured in the RRC connection reestablishment. At S208, the UE 100 sends the RRC connection reestablishment complete message to the base station.

Enhancements to Security Framework for Re-establishment: In the LTE, for SRB2 and DRBs, security is always activated from the start, i.e. the E-UTRAN does not establish these bearers prior to activating security. The RRC connection reconfiguration message carrying the configuration for SRB2 and DRB(s) is also ciphering and integrity protected. As a result, SRB2 and DRB(s) are not resumed along with SRB1 as RRC connection re-establishment message is not integrity protected and ciphered. In order to have SRB2 and DRB(s) to resume operation along with SRB1 during re-establishment procedure, security should be applied to the re-establishment message.

Only Next hop Chaining Count is updated as part of security update during the RRC connection re-establishment. Therefore, the new K-gNB key is updated based on the existing K-ASME key, using the Next hop Chaining Count value indicated in reestablishment message from the gNB. The new integrity (K-RRCint) and ciphering keys (K-RRC_{enc}, KUP_{enc}) can be derived from the new K-gNB. Since the keys are already derived and available during this time, the RRC connection re-establishment message over the configuration for radio bearers resume is received, can be integrity protected but not ciphered. All subsequent RRC messages that are transmitted and received, including RRC connection re-establishment complete message are both integrity protected and ciphered. Therefore, it is proposed method, in the NR, the RRC connection re-establishment message is integrity protected but not ciphered. It is also proposed that all subsequent RRC messages including RRC connection reestablishment complete message are both integrity protected and ciphered.

Since the integrity protection keys and ciphering keys are already derived and available post reception of re-establishment message from the network 200, any downlink assignment on the DRB that is received from the network 200 can be successfully deciphered even if it is received prior to transmission of re-establishment completed message. The network 200 initiates/ resumes data transmission to the UE 100 once the UE 100 is integrity verified. Based on the proposed methods, the DRB configuration is received from the network 200 prior to gNB performing integrity verification/ authentication of the UE 100. The first uplink data transmission opportunity is available only after successfully configuring/ resuming the DRB. When the DRB is resumed using the RRC connection re-establishment message, the first opportunity for uplink data transmission is available only while transmitting the RRC connection reestablishment complete message from the UE 100 i.e., the uplink transport block will contain re-establishment complete message multiplexed along with DRB data. As a result, both ciphered DRB data and ciphered and integrity protected re-establishment complete message is available at gNB at the same time. The gNB can perform integrity verification of the UE 100 prior to processing of the DRB data and ensure that the UE 100 is authenticated.

Methods to Handle Re-establishment failure cases: In LTE, the connection reestablishment succeeds only if the concerned cell is prepared i.e. has a valid UE context. If the context of the UE 100 could not be retrieved by the eNB where RRC Connection Reestablishment Request is received, the eNB needs to reject the RRC reestablishment with RRC Connection Reestablishment Reject. Additionally, the LTE employs a timer based control (T311) to the RRC connection re-establishment procedure. Expiry of the timer indicates a failure in the RLF recovery attempt. On successfully performing cell selection during RLF recovery, the timer is stopped. The NR should also support a similar timer based control of re-establishment procedure. Therefore, it is proposed that a timer based RRC connection re-establishment failure procedure like LTE (T311) is supported in the NR. There are two possible options for treating re-establishment failure.

Option 1: When the context of the UE 100 is not available at the network 200, RRC connection re-establishment reject is sent to the UE 100.

Option 2: When the context of the UE 100 is not available at the network 200, the RRC connection setup is sent to the UE 100.

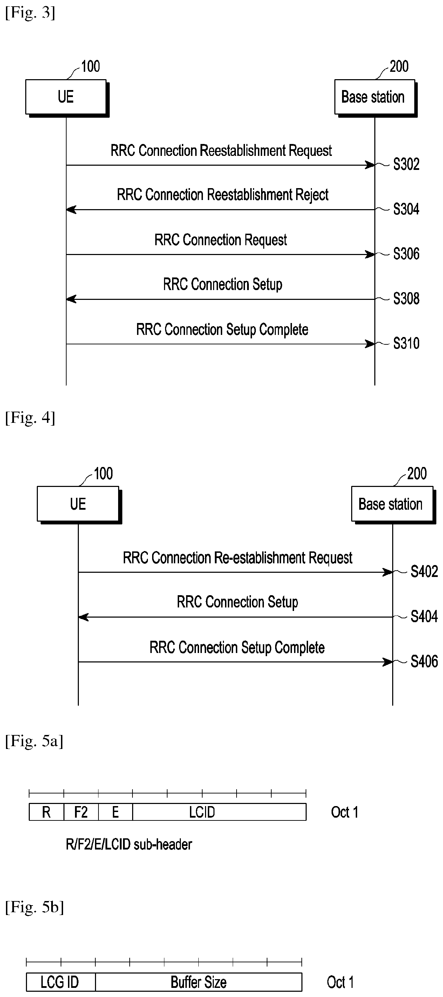

FIG. 3 is a sequential diagram illustrating a behavior of UE 100 during the RRC connection reestablishment procedure, according to the prior art.

Option 1: When the context of the UE 100 is not available at the network 200, the RRC connection re-establishment reject is sent to the UE 100: In such cases, the UE 100 transitions to IDLE state on reception of RRC connection re-establishment reject from the network 200. On receiving reject form the network 200, the UE 100 initiates cell selection procedure and follows the IDLE state procedures. On finding a suitable cell, the same is indicated to the upper layers and a Non-access stratum (NAS) sends a request that initiates a new RRC connection establishment procedure. This method has both high latency in recovering from RLF as well as increased signaling over the air interface. This method has high latency and increased signaling and is less suited for services like uRLLC. This method is illustrated in FIG 3. As shown in the FIG. 3, at S302, UE 100 sends the RRC connection reestablishment request message to the base station 200. At S304, the base station 200 sends the RRC connection reestablishment reject message to the UE 100. At S306, the UE 100 sends the RRC connection request to the base station 200. At S308, the base station 200 sends the RRC connection setup to the UE 100. At S310, the UE 100 sends the RRC connection setup complete to the base station 200.

FIGS. 4 illustrates sequence diagram for handling RRC connection re-establishment failure, according to an embodiment as disclosed herein.

Option 2: When the context of the UE 100 is not available at the network 200, the RRC connection setup is sent to the UE 100: On reception of the RRC connection setup message instead of RRC connection re-establishment messages, the UE 100 identifies that RLF/ RRC connection recovery has failed. The reception of the RRC connection setup message instead of the RRC connection re-establishment message from the NW 200 signals the UE 100 that RLF recovery has failed i.e. new gNB has failed to retrieve the context of the UE 100. The UE 100 then performs the normal actions on receiving setup and configures all entities based on the configurations received over the RRC connection setup message. Further communication to the network 200 can proceed over the same connection and new RRC connection does not have to be established. This reduces the connection establishment latency is more suited for uRLLC type of services. This also reduces the signaling. The same is illustrated in the FIG 4. As shown in the FIG. 4, At S402, the UE 100 sends the RRC Connection re-establishment request to the base station 200. At S404, the base station 200 sends the RRC connection setup to the UE 100 instead for RRC connection reestablishment message. At S406, the UE 100 sends the RRC connection setup complete to the base station 200.

Buffer Status Reporting: In NR, for DL and UL, duplication solution for CA case uses PDCP duplication to more than 1 logical channel so that the duplicated PDCP PDUs are sent over different carriers. The duplicated PDCP PDUs are submitted to two different RLC entities. The PDCP duplication solution for CA requires only one MAC entity. The logical channel mapping restrictions need to be introduced to handle duplicates in within one MAC entity (CA). Logical channel prioritization takes into account the all the restrictions configured for the logical channels. Additionally, the PDCP duplication solution for the CA requires only one MAC entity.

In LTE CA, for the purpose of buffer status reporting, the PDCP indicates data available for transmission which includes PDCP Control PDUs, SDUs which has not been processed by the PDCP and the PDUs if the SDUs have been processed by the PDCP. There is no duplication of PDCP supported and hence the data available for transmission provided to MAC entity does not include duplicate PDCP PDUs.

The BSR as provisioned in the current version of specification indicates the buffer occupancy per SCG. There is no logical channel specific BSR or BO indication provided to the NW 200. Also, the BSR triggered and transmitted to the NW 100 is common for all the carriers and only one of the component carriers will carry the BSR CE. It is sufficient for transmitting BSR over only one carrier as both the component carriers that carry the duplicate PDUs are interfaced with the same MAC entity. CA based duplication is supported in NR where duplicate PDCP PDUs are submitted to two different RLC entities. Both these RLC entities submit their respective PDUs to a common MAC entity. The MAC entity has to ensure that PDUs submitted by these two RLC entities are sent over different carriers. Therefore, it is necessary that gNB MAC is made aware of the data available for transmission over the duplicate RLC entity in order to facilitate duplicate PDU transmission over a different carrier. Therefore, the gNB has to be made aware of the data available for transmission over the duplicate RLC entity in order to ensure duplicate PDU transmission over a different carrier.

Below are some of the configurations that the network 200 can provide when CA based duplication is enabled in the NR.
a)Case 1: The logical channels configured to carry the duplicate PDUs are mapped to same LCG and there are no other LCs mapped to the same LCG,
b)Case 2: The Logical channels configured to carry the duplicate PDUs are mapped to same LCG and there are other LCs mapped to the same LCG,
c)Case 3: The Logical channels configured to carry the duplicate PDUs are mapped to different LCG and there are no LCGs mapped to these LCGs,
d)Case 4: The Logical channels configured to carry the duplicate PDUs are mapped to different LCG and there are other LCs mapped to one of these LCGs, and
e)Case 5: The Logical channels configured to carry the duplicate PDUs are mapped to different LCG and there are other LCs mapped to both of these LCGs.

In case 2 and case 5, the gNB cannot identify the amount of data that belong to duplicate PDUs. Therefore, it cannot ensure that UL grants for the duplicate legs are provided over different component carriers. Additionally, BO on both the RLC legs of duplicate bearer can be different based on the amount of data already scheduled from these RLC entities. It is also possible that there more multiple duplicated bearers configured to the UE 100. There are 2 options to reporting buffer status to the gNB.

Option 1: Data available for transmission includes the duplicated PDCP PDUs: For NR bearer configured with CA based PDCP duplication, the PDCP should include the amount of duplicate PDUs while indicating the data available for transmission to the MAC entity.

Option 2: Data available for transmission excludes the duplicated PDCP PDUs: For NR bearer configured with CA based PDCP duplication, the PDCP need not include the amount of duplicate PDUs while indicating the data available for transmission to the MAC entity. The gNB is aware of the bearer on which duplication is enabled. In such cases, gNB MAC can ensure that uplink resources for duplicate PDU transmission is provided on another carrier.

Both these options of reporting the buffer status to the gNB does not educate the gNB on the buffer occupancy on the logical channel due to amount of duplicated PDUs/Bytes available for transmission. As a result, the gNB is unaware of how much the UL grants are to be allocated over the component carriers that are configured to carry the duplicated PDUs/ Bytes.

Indication of duplicate PDUs: Irrespective of whether the duplicate PDUs are included in the indication of the data available for transmission provided to the MAC entity based on which the buffer size is filled in MAC BSR CE, the network 200 does not know the exact amount of duplicate PDUs available for transmission. As a result, the network 200 cannot correctly provide the required grants on the component carrier configured to carry the duplicate PDUs. In order to facilitate the gNB to improve resource efficiency in uplink scheduling and grant allocation, the method can be used to indicate the buffer occupancy over the carrier configured to carry duplicate PDUs is needed. Since the scheduling decisions are taken by MAC, this indication should be sent to the gNB over a message or signal which terminates either at MAC or lower layers.

Method to indicate buffer occupancy on each of the duplicated carrier using MAC CE per duplicated carrier: During uplink transmissions on a component carrier configured to carry duplicated PDUs, the UE MAC entity may include a new MAC CE indicating the buffer occupancy on this component carrier. This buffer occupancy includes only the amount of data that are buffered due to duplication of PDCP PDUs in NR CA based duplication case. Like other MAC CEs, this new duplicate buffer occupancy CE should also have a 1 byte sub-header which helps in identifying the CE as indicated in FIGS 5a-5c.

FIG. 5a illustrates a sub-header for identifying the duplicate buffer occupancy CE, according to an embodiment as disclosed herein.

FIG. 5b illustrates a MAC CE indicating buffer occupancy due to duplicate PDCP PDUs along with LCG to which the logical channel is configured, according to an embodiment as disclosed herein.

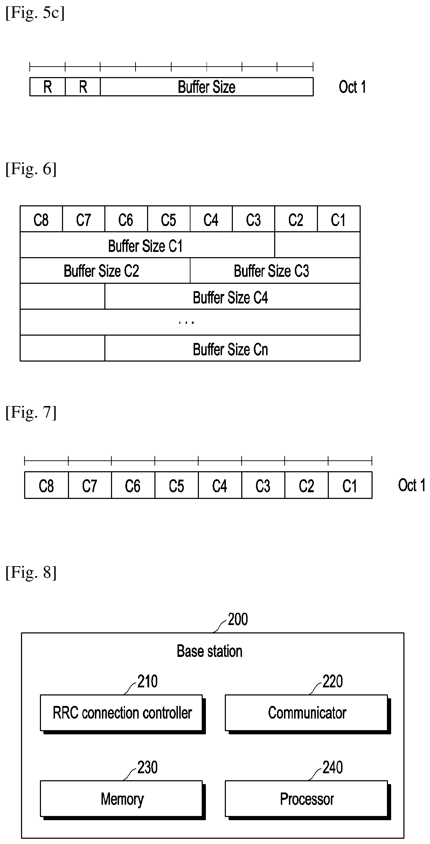

FIG. 5c illustrates the MAC CE indicating buffer occupancy due to duplicate PDCP PDUs without indicating LCG it is configured with, according to an embodiment as disclosed herein.

The various fields mentioned in this sub-header are described as below:
a)LCID: The Logical Channel ID field identifies the logical channel ID to identify the corresponding MAC CE,
b)F2: The format F2 field value is set to 0, and
c)E: Extension bit indicating if there are more sub-headers multiplexed to the transport block/ packet.

FIG. 6 illustrates Variable sized MAC CE to indicate the amount of duplicate PDUs per CC configured to carry duplicate PDUs, according to an embodiment as disclosed herein.

Method to indicate amount of duplicate buffer occupancy due to duplicate PDUs for all the duplicate legs: Along with uplink data, the UE MAC entity may include a MAC CE to indicate the amount of PDUs/ Bytes buffered for uplink transmission due to duplication at the PDCP. This CA contains the duplicated PDUs buffer occupancy over all the duplicate legs (or component carriers configured to carry duplicate packets) and multiplex them together to send to the network 200. This CE is initiated following successful transmission of BSR to the gNB. This CE is identified using the MAC sub-header as illustrated is FIG 5A. The MAC CE format is illustrated is FIG 6.

The various fields mentioned in this CE structure are described as below:
a)Ci: This field indicates the presence of duplicate PDUs/ Bytes buffered for this component carrier which is configured to carry PDCP duplicate PDUs, and
b)Buffer Size: Indicate the amount of bytes buffered in uplink buffers for transmission of PDCP duplicate PDUs.

Method for the network 200 to configure the duplicate legs to simply resource allocation decisions: The problem of failing to identify the amount of duplicate PDUs/ bytes buffered at the UE 100 for uplink transmission arrives when the logical channels configured to carry the duplicated PDCP PDUs are multiplexed along with other logical channels. Therefore, the problem can be simplified with a specific rule in logical channel configuration for duplicate legs.

The problem of identifying the buffer occupancy due to PDCP duplicated PDUs are minimized if the network 200 ensure that the duplicate legs are configured to logical channel groups (LCG) which are not multiplexed with logical channels from other bearers. Therefore, the BSR correctly identifies to the network 200 on the amount of data buffered on duplicate legs. However, it is difficult to achieve using the existing provisions in the MAC configurations, where there are only 4 LCGs available. This limited number of LCG restricts the flexibility available at the network for accommodate for this type of configurations. Therefore, the number of LCGs has to be increased to 8 of even 16 per UE 100 in case of duplication.

Method to indicate only the presence of duplicate data buffered at UE using a MAC CE bitmap: In another method, the method can be used to handle the issue of duplicate data buffer status reporting to the network 200 is to simply indicate the present of duplicate PDUs that are buffered. The UE 100 indicates to the NW 200 about the logical channels on which duplicate PDUs are available for transmission. This indication is sent using the MAC CE containing bitmap of all the configured logical channels for duplication.

The gNB is aware of the MAC configuration provided to the UE 100 and can identify the LCG over which the amount of buffer occupancy (for the duplicate logical channel) is reported using the BSR MAC CE. This way, the network 200 can identify that there is duplicate PDUs available and pending for transmission at the UE 100. The network MAC entity takes intelligent decisions to allocate uplink grants for the carriers mapped to that logical channels which are indicated using this MAC CE (LCIDs over which duplicate PDUs are pending transmission). This MAC CE is triggered along with or immediately after BSR MAC CE is triggered and reported to the NW.

FIG. 7 illustrates the MAC CE indicating bitmap of component carrier having pending uplink transmission of PDCP duplicate PDUs, according to an embodiment as disclosed herein.

Continuous reporting of this CE will eventually inform the network 200 on the presence of duplicate data pending at the UE 100 for uplink transmission. When the LCID in the bitmap (MAC CE) indicate '0', the gNB identifies that there are more duplicate PDUs pending UL transmission on that logical channel and will stop allocating UL grants for the associated Scell or component carrier. The MAC CE structure is illustrated in FIG 7.

Where Ci: This field indicates the component carrier of Scell ids on which duplicate PDCP PDUs are buffered and available for uplink transmission. The value '0' indicates that there are not buffered packets and value '1' indicates the presence of buffered duplicate PDCP PDUs/ Bytes for uplink transmission.

FIG. 8 is a block diagram of the base station 200, according to an embodiment as disclosed herein. In an embodiment, the base station 200 includes a RRC connection controller 210, a communicator 220, a memory 230, and a processor 240. The processor 240 is coupled with the RRC connection controller 210, the communicator 220, and the memory 230.

In an embodiment, the RRC connection controller 210 is configured to receive the RRC connection reestablishment request message from the UE 100. The RRC connection controller 210 is configured to send the RRC connection reestablishment message on the default SRB to the UE 100. The RRC connection reestablishment message is sent on the default SRB with intention to allow a re-establishment of DRBs, the first SRB and the second SRB without waiting for reception of a RRC reestablishment complete message from the UE 100. The RRC connection controller 210 is configured to receive the RRC reestablishment complete message from the UE 100.

In an embodiment, the RRC connection controller 210 is configured to receive the RRC connection reestablishment request message from the UE 100. Further, the RRC connection controller 210 is configured to detect whether a RRC re-establishment failure or an attempt by the base station 200 for context retrieval for the UE 100 is failed. Further, the RRC connection controller 210 is configured to send the RRC connection reestablishment response message with the RRC connection setup in response to detecting the RRC re-establishment failure or attempt by the base station 200 for context retrieval for the UE 100 is failed. The RRC connection controller 210 is configured to receive the RRC connection setup complete message from the UE 100.

The communicator 220 is configured for communicating internally between internal hardware components and with external devices via one or more networks. The communicator 220 is configured for communicating with the RRC connection controller 210 to handle the communication in the wireless communication system.

Further, the processor 240 which is configured to execute instructions stored in the memory 230 and to perform various processes. The memory 230 also stores instructions to be executed by the processor 240. The memory 230 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 230 may, in some examples, be considered a non-transitory storage medium. The term "non-transitory" may indicate that the storage medium is not embodied in a carrier wave or a propagated signal. However, the term "non-transitory" should not be interpreted that the memory is nonmovable. In some examples, the memory 230 can be configured to store larger amounts of information than the memory. In certain examples, a non-transitory storage medium may store data that can, over time, change (e.g., in Random Access Memory (RAM) or cache).

Although the FIG. 8 shows various hardware components of the base station 200 but it is to be understood that other embodiments are not limited thereon. In other embodiments, the base station 200 may include less or more number of components. Further, the labels or names of the components are used only for illustrative purpose and does not limit the scope of the invention. One or more components can be combined together to perform same or substantially similar function to handle packet duplication e and resumption of RBs in wireless communication system.

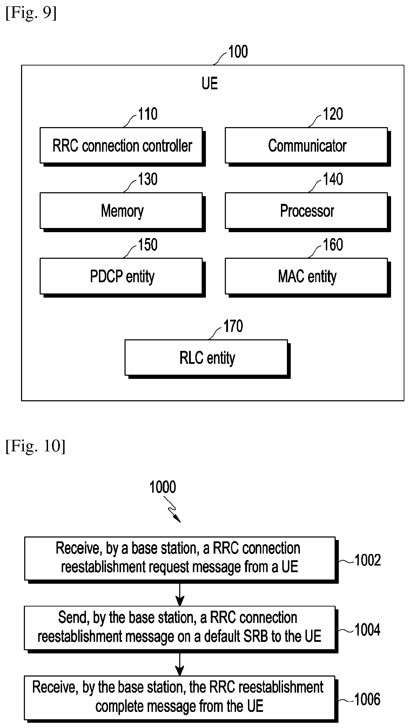

FIG. 9 is a block diagram of the UE 100, according to an embodiment as disclosed herein. In an embodiment, the UE 100 includes a RRC connection controller 110, a communicator 120, a memory 130, a processor 140, a PDCP entity 150, a MAC entity 160 and a RLC entity 170. The processor 140 is coupled with the RRC connection controller 110, the communicator 120, the memory 130, the PDCP entity 150, the MAC entity 160 and the RLC entity 170.

In an embodiment, the RRC connection controller 110 is configured to send the RRC connection reestablishment request message to the base station 200. The RRC connection controller 110 is configured to receive the RRC connection reestablishment message on the default SRB from the base station 200. The RRC connection reestablishment message is received on the default SRB with an intention to allow the reestablishment of DRBs, the first SRB and the second SRB without sending the RRC re-establishment complete message from the UE 100. Further, the RRC connection controller 110 is configured to re-establish and resume the first SRB, the second SRB and the DRBs during the RRC connection reestablishment. Further, the RRC connection controller 110 is configured to send the RRC connection reestablishment complete message to the base station 200.

In an embodiment, the RRC connection controller 110 is configured to send the RRC connection reestablishment request message to the base station 200. The RRC connection controller 110 is configured to receive the RRC connection reestablishment response message with the RRC connection setup message. Further, the RRC connection controller 110 is configured to detect the RRC re-establishment failure or attempt by the base station 200 for context retrieval for the UE 100 is failed. The entities refer to applying the configurations to the PDCP entity, the RLC entity and the MAC entity on the UE belong to every DRB and SRB that is newly established. The RRC connection controller 110 configures all entities based on configurations received over the RRC connection setup message. The RRC connection controller 110 is configured to send the RRC connection setup complete message to the base station 200.

In an embodiment, the PDCP entity 150 is configured to detect that the PDCP entity 150 itself is associated with two RLC entities 170. The PDCP entity 150 is configured to detect whether the PDCP duplication is activated or deactivated. The PDCP entity 150 is configured to indicate same PDCP data volume for transmission the MAC entity 160 associated with RLC entities 170 when the PDCP duplication is activated or indicate a PDCP data volume for transmission to the MAC entity 160 only over an active logical channel when the PDCP duplication is deactivated.

In an embodiment, the MAC entity 160 is configured to detect that the PDCP duplication is activated or deactivated for the DRB. Further, the MAC entity 160 is configured to indicate the deactivation of PDCP duplication of the DRB to the upper layers and indicating the PDCP data available for transmission only over the RLC entity and logical channel that is still active.

In an embodiment, the PDCP entity 150 is configured to detect the PDCP duplication is activated or deactivated for the DRB. The PDCP entity 150 is configured to indicate to discard duplicated PDCP Data PDU to an AM RLC entity when the PDCP duplications is deactivated or indicate to discard all duplicated PDCP Data PDUs to the RLC entity 170 when the PDCP duplication is deactivated.

The communicator 120 is configured for communicating internally between internal hardware components and with external devices via one or more networks. The communicator 120 is configured for communicating with the RRC connection controller 110, the PDCP entity 150, and the MAC entity 160 to handle the wireless communication in the wireless communication system.

Further, the processor 140 which is configured to execute instructions stored in a memory 130 and to perform various processes. The memory 130 also stores instructions to be executed by the processor 140. The memory 130 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 130 may, in some examples, be considered a non-transitory storage medium. The term "non-transitory" may indicate that the storage medium is not embodied in a carrier wave or a propagated signal. However, the term "non-transitory" should not be interpreted that the memory is nonmovable. In some examples, the memory 130 can be configured to store larger amounts of information than the memory. In certain examples, a non-transitory storage medium may store data that can, over time, change (e.g., in Random Access Memory (RAM) or cache).

Although the FIG. 9 shows various hardware components of the UE 100 but it is to be understood that other embodiments are not limited thereon. In other embodiments, the UE 100 may include less or more number of components. Further, the labels or names of the components are used only for illustrative purpose and does not limit the scope of the invention. One or more components can be combined together to perform same or substantially similar function to handle packet duplicate and resumption of RBs in wireless communication system.

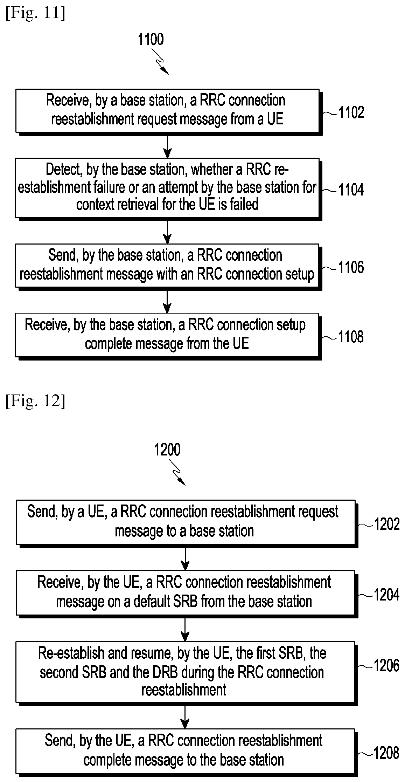

FIG. 10 and FIG. 11 are flow diagrams 1000 and 1100 illustrating various operation, implemented by the base station 200, for handling packet duplication and resumption of RBs in the wireless communication system, according to an embodiment as disclosed herein. The operations (1002-1006) are performed by the RRC connection controller 210.

As shown in the FIG. 10, the operations (1002-1006) are performed by the RRC connection controller 210. At 1002, the method includes receiving the RRC connection reestablishment request message from the UE 100. At 1004, the method includes sending the RRC connection reestablishment message on the default SRB to the UE 100. The RRC connection reestablishment message is sent on the default SRB with intention to allow the re-establishment of DRBs, the first SRB, and the second SRB without waiting for reception of a RRC reestablishment complete message from the UE 100. At 1006, the method includes receiving the RRC reestablishment complete message from the UE 100.

As shown in the FIG. 11, the operations (1102-1108) are performed by the RRC connection controller 210. At 1102, the method includes receiving the RRC connection reestablishment request message from the UE 100. At 1104, the method includes detecting whether the RRC re-establishment failure or the attempt by the base station 200 for context retrieval for the UE 100 is failed. At 1106, the method includes sending the RRC connection reestablishment response message with the RRC connection setup in response to detecting the RRC re-establishment failure or attempt by the base station 200 for context retrieval for the UE 100 is failed. At 1108, the method includes receiving the RRC connection setup complete message from the UE 100.

FIG. 12 to FIG. 16 are flow diagrams 1200-1600 illustrating various operation, implemented by the UE 100, for handling packet duplication and resumption of RBs in the wireless communication system, according to an embodiment as disclosed herein.

As shown in the FIG. 12, the operations (1202-1208) are performed by the RRC connection controller 110. At 1202, the method includes sending the RRC connection reestablishment request message to the base station 200. At 1204, the method includes receiving the RRC connection reestablishment message on the default SRB from the base station 200. The RRC connection reestablishment message is received on the default SRB with the intention to allow the re-establishment of DRBs, the first SRB, and the second SRB without sending the RRC re-establishment complete message from the UE 100. At 1206, the method includes re-establishing and resuming the first SRB, the second SRB and the DRB during the RRC connection reestablishment. At 1208, the method includes sending the RRC connection reestablishment complete message to the base station 200.

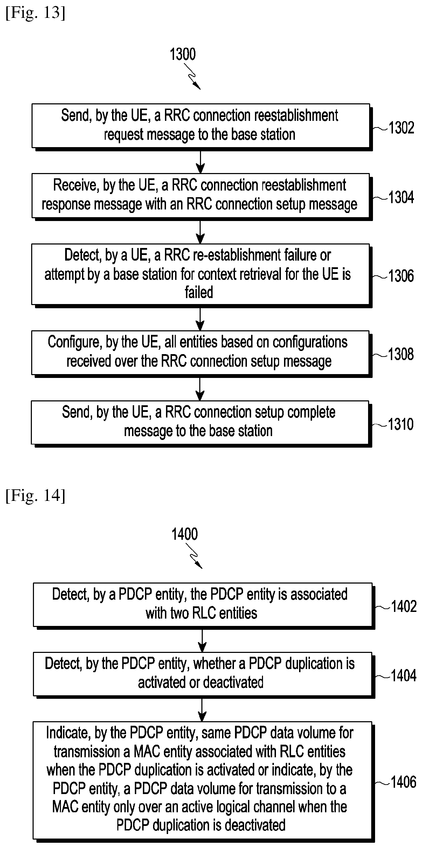

As shown in the FIG. 13, the operations (1302-1310) are performed by the RRC connection controller 110. At 1302, the method includes sending the RRC connection reestablishment request message to the base station. At 1304, the method includes receiving the RRC connection reestablishment response message with the RRC connection setup message. At 1306, the method includes detecting the RRC reestablishment failure or attempt by the base station 200 for context retrieval for the UE 100 is failed. At 1308, the method includes configuring all entities based on configurations received over the RRC connection setup message. At 1310, the method includes sending the RRC connection setup complete message to the base station 200.

As shown in the FIG. 14, the operations (1402-1406) are performed by the PDCP entity 150. At 1402, the method includes detecting the PDCP entity is associated with two RLC entities. At 1404, the method includes detecting whether the PDCP duplication is activated or deactivated. At 1406, the method includes indicating same PDCP data volume for transmission the MAC entity 160 associated with RLC entities 170 when the PDCP duplication is activated or indicating the PDCP data volume for transmission to the MAC entity 160 only over the active logical channel when the PDCP duplication is deactivated.

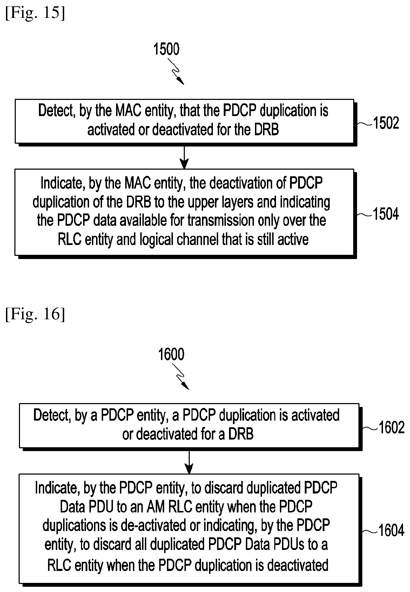

As shown in the FIG. 15, the operations (1502-1504) are performed by the MAC entity 160. At 1502, the method includes detecting that the PDCP duplication is activated or deactivated for the DRB. At 1504, the method includes indicating the deactivation of PDCP duplication of the DRB to the upper layers and indicating the PDCP data available for transmission only over the RLC entity and logical channel that is still active.

As shown in the FIG. 16, the operations (1602-1604) are performed by the PDCP entity 150. At 1602, the method includes detecting the PDCP duplication is activated or deactivated for the DRB. At 1604, the method includes indicating to discard duplicated PDCP Data PDU to the AM RLC entity when the PDCP duplications is deactivated or indicating to discard all duplicated PDCP Data PDUs to the RLC entity 170 when the PDCP duplication is deactivated.

The UE 100 can be, for example but not limited to, a cellular phone, a tablet, a smart phone, a laptop, a Personal Digital Assistant (PDA), a global positioning system, a multimedia device, a video device, a game console, or the like. The UE 100 may also be referred to by those skilled in the art as a mobile station, a subscriber station, a mobile unit, a subscriber unit, a wireless unit, a remote unit, a mobile device, a wireless device, a wireless communications device, a mobile subscriber station, an access terminal, a mobile terminal, a wireless terminal, a remote terminal, a handset, a user agent, a mobile client, or the like.

The terms, the network, the base station, the eNB and the gNB are used interchangeably in the description.

The various actions, acts, blocks, steps, or the like in the flow diagrams 1000-1600 may be performed in the order presented, in a different order or simultaneously. Further, in some embodiments, some of the actions, acts, blocks, steps, or the like may be omitted, added, modified, skipped, or the like without departing from the scope of the invention.

The embodiments disclosed herein can be implemented through at least one software program running on at least one hardware device and performing network management functions to control the elements.

## Claims

1. A method for performing a wireless communication with a user equipment, UE, (100) by a base station (200), comprising:
receiving, a radio resource control, RRC, connection reestablishment request message from the UE (100);
transmitting, a RRC connection reestablishment message on a signaling radio bearer 1, SRB 1, to the UE (100), in response to the RRC connection reestablishment request message, the RRC connection reestablishment message being integrity protected; and
receiving, a RRC reestablishment complete message which is integrity protected and ciphered from the UE (100) in response to the RRC connection reestablishment message, wherein the RRC connection reestablishment complete message is integrity protected using a first key and ciphered using a second key,
wherein the first key is a K-RRCint key and the second key is a K-RRCenc key.

2. The method of claim 1, further comprising:
transmitting an RRC connection setup message to the UE (100) for RRC connection establishment procedure, if the UE context is not verified or retrieved.

3. The method of claim 1, wherein the SRB 1 is resumed during the RRC connection reestablishment.

4. A method for performing a wireless communication by a user equipment, UE (100), comprising:
transmitting, a radio resource control, RRC, connection reestablishment request message to a base station (200);
receiving, a RRC connection reestablishment message on a signaling radio bearer 1, SRB 1, to the UE (100), in response to the RRC connection reestablishment request message from the base station (200), the RRC connection reestablishment message being integrity protected; and
transmitting, a RRC connection reestablishment complete message which is integrity protected and ciphered to the base station (200) in response to the RRC connection reestablishment message, wherein the RRC connection reestablishment complete message is integrity protected using a first key and ciphered using a second key,
wherein the first key is a K-RRCint key and the second key is a K-RRCenc key.

5. The method of claim 4, further comprising:
receiving an RRC connection setup message from the base station (200) for RRC connection establishment procedure, if the UE context is not verified or retrieved.

6. The method of claim 4, wherein the UE (100) resumes the SRB 1 during the RRC connection reestablishment.

7. A base station (200) for performing a wireless communication, comprising:
a memory (230);
at least one processor (240) coupled to the memory (230), configured to:
receive a radio resource control, RRC, connection reestablishment request message from the UE (100);
transmit a RRC connection reestablishment message on a signaling radio bearer 1, SRB 1, to the UE (100), in response to the RRC connection reestablishment request message, the RRC connection reestablishment message being integrity protected; and
receive a RRC reestablishment complete message which is integrity protected and ciphered from the UE (100) in response to the RRC connection reestablishment message, wherein the RRC connection reestablishment complete message is integrity protected using a first key and ciphered using a second key,
wherein the first key is a K-RRCint key and the second key is a K-RRCenc key.

8. The base station (200) of claim 7, wherein the at least one processor (240) is configured to:
transmit an RRC connection setup message to the UE (100) for RRC connection establishment procedure, if the UE context is not verified or retrieved.

9. The base station (200) of claim 7, wherein the SRB 1 is resumed during the RRC connection reestablishment.

10. A user equipment, UE, (100) for performing a wireless communication, comprising:
a memory (130);
at least one processor (140) coupled to the memory (130), configured to:
transmit a radio resource control, RRC, connection reestablishment request message to a base station (200);
receive a RRC connection reestablishment message on a signaling radio bearer 1, SRB 1, to the UE (100), in response to the RRC connection reestablishment request message from the base station (200), the RRC connection reestablishment message being integrity protected; and
re-establish and resuming the SRB 1, during the RRC connection reestablishment; and
transmit a RRC connection reestablishment complete message to the base station (200), wherein the RRC connection reestablishment complete message is integrity protected using a first key and ciphered using a second key,
wherein the first key is a K-RRCint key and the second key is a K-RRCenc key.

11. The UE (100) of claim 10, wherein the at least one processor (140) is configured to:
receive an RRC connection setup message from the base station (200) for RRC connection establishment procedure, if the UE context is not verified or retrieved.

12. The UE (100) of claim 10, wherein the at least one processor (140) is configured to resume the SRB 1 during the RRC connection reestablishment.

## Patentansprüche

1. Verfahren zum Durchführen einer drahtlosen Kommunikation mit einem Benutzergerät, UE, (100) durch eine Basisstation (200), umfassend:
Empfangen einer Funkressourcensteuerungs-, RRC, - Verbindungswiederaufbauanforderungsnachricht vom UE (100);
Übertragen einer RRC-Verbindungswiederaufbaunachricht auf einem Signalisierungsfunkträger 1, SRB 1, an das UE (100) als Reaktion auf die RRC-Verbindungswiederaufbauanforderungsnachricht, wobei die RRC-Verbindungswiederaufbaunachricht integritätsgeschützt ist; und
Empfangen einer RRC-Wiederaufbauabschlussnachricht, die integritätsgeschützt und verschlüsselt ist, von dem UE (100) als Reaktion auf die RRC-Verbindungswiederaufbaunachricht, wobei die RRC-Verbindungswiederaufbauabschlussnachricht unter Verwendung eines ersten Schlüssels integritätsgeschützt ist und unter Verwendung eines zweiten Schlüssels verschlüsselt ist,
wobei der erste Schlüssel ein K-RRCint-Schlüssel ist und der zweite Schlüssel ein K-RRCenc-Schlüssel ist.

2. Verfahren nach Anspruch 1, ferner umfassend:
Übertragen einer RRC-Verbindungseinrichtungsnachricht an das UE (100) für die RRC-Verbindungsaufbauprozedur, wenn der UE-Kontext nicht verifiziert oder abgerufen ist.

3. Verfahren nach Anspruch 1, wobei der SRB 1 während des RRC-Verbindungswiederaufbaus wiederaufgenommen wird.

4. Verfahren zum Durchführen einer drahtlosen Kommunikation durch ein Benutzergerät, UE (100), umfassend:
Übertragen einer Funkressourcensteuerungs-, RRC, - Verbindungswiederaufbauanforderungsnachricht an eine Basisstation (200);
Empfangen einer RRC-Verbindungswiederaufbaunachricht auf einem Signalisierungsfunkträger 1, SRB 1, an das UE (100) als Reaktion auf die RRC-Verbindungswiederaufbauanforderungsnachricht von der Basisstation (200), wobei die RRC-Verbindungswiederaufbaunachricht integritätsgeschützt ist; und
Übertragen einer RRC-Verbindungswiederaufbauabschlussnachricht, die integritätsgeschützt und verschlüsselt ist, an die Basisstation (200) als Reaktion auf die RRC-Verbindungswiederaufbaunachricht, wobei die RRC-Verbindungswiederaufbauabschlussnachricht unter Verwendung eines ersten Schlüssels integritätsgeschützt ist und unter Verwendung eines zweiten Schlüssels verschlüsselt ist,
wobei der erste Schlüssel ein K-RRCint-Schlüssel ist und der zweite Schlüssel ein K-RRCenc-Schlüssel ist.

5. Verfahren nach Anspruch 4, ferner umfassend:
Empfangen einer RRC-Verbindungseinrichtungsnachricht von der Basisstation (200) für die RRC-Verbindungsaufbauprozedur, wenn der UE-Kontext nicht verifiziert oder abgerufen ist.

6. Verfahren nach Anspruch 4, wobei das UE (100) den SRB 1 während des RRC-Verbindungswiederaufbaus wieder aufnimmt.

7. Basisstation (200) zum Durchführen einer drahtlosen Kommunikation, umfassend:
einen Speicher (230);
mindestens einen Prozessor (240), der mit dem Speicher (230) gekoppelt ist und konfiguriert ist zum:
Empfangen einer Funkressourcensteuerungs-, RRC, - Verbindungswiederaufbauanforderungsnachricht vom UE (100);
Übertragen einer RRC-Verbindungswiederaufbaunachricht auf einem Signalisierungsfunkträger 1, SRB 1, an das UE (100) als Reaktion auf die RRC-Verbindungswiederaufbauanforderungsnachricht, wobei die RRC-Verbindungswiederaufbaunachricht integritätsgeschützt ist; und
Empfangen einer RRC-Wiederaufbauabschlussnachricht, die integritätsgeschützt und verschlüsselt ist, von dem UE (100) als Reaktion auf die RRC-Verbindungswiederaufbaunachricht, wobei die RRC-Verbindungswiederaufbauabschlussnachricht unter Verwendung eines ersten Schlüssels integritätsgeschützt ist und unter Verwendung eines zweiten Schlüssels verschlüsselt ist,
wobei der erste Schlüssel ein K-RRCint-Schlüssel ist und der zweite Schlüssel ein K-RRCenc-Schlüssel ist.

8. Basisstation (200) nach Anspruch 7, wobei der mindestens eine Prozessor (240) konfiguriert ist zum:
Übertragen einer RRC-Verbindungseinrichtungsnachricht an das UE (100) für die RRC-Verbindungsaufbauprozedur, wenn der UE-Kontext nicht verifiziert oder abgerufen ist.

9. Basisstation (200) nach Anspruch 7, wobei der SRB 1 während des RRC-Verbindungswiederaufbaus wiederaufgenommen wird.

10. Benutzergerät, UE, (100) zum Durchführen einer drahtlosen Kommunikation, umfassend:
einen Speicher (130);
mindestens einen Prozessor (140), der mit dem Speicher (130) gekoppelt ist und konfiguriert ist zum:
Übertragen einer Funkressourcensteuerungs-, RRC, - Verbindungswiederaufbauanforderungsnachricht an eine Basisstation (200);
Empfangen einer RRC-Verbindungswiederaufbaunachricht auf einem Signalisierungsfunkträger 1, SRB 1, an das UE (100) als Reaktion auf die RRC-Verbindungswiederaufbauanforderungsnachricht von der Basisstation (200), wobei die RRC-Verbindungswiederaufbaunachricht integritätsgeschützt ist; und
Wiederaufbauen und Wiederaufnehmen des SRB 1 während des RRC-Verbindungswiederaufbaus; und
Übertragen einer RRC-Verbindungswiederaufbauabschlussnachricht an die Basisstation (200), wobei die RRC-Verbindungswiederaufbauabschlussnachricht unter Verwendung eines ersten Schlüssels integritätsgeschützt ist und unter Verwendung eines zweiten Schlüssels verschlüsselt ist,
wobei der erste Schlüssel ein K-RRCint-Schlüssel ist und der zweite Schlüssel ein K-RRCenc-Schlüssel ist.

11. UE (100) nach Anspruch 10, wobei der mindestens eine Prozessor (140) konfiguriert ist zum:
Empfangen einer RRC-Verbindungseinrichtungsnachricht von der Basisstation (200) für die RRC-Verbindungsaufbauprozedur, wenn der UE-Kontext nicht verifiziert oder abgerufen ist.

12. UE (100) nach Anspruch 10, wobei der mindestens eine Prozessor (140) konfiguriert ist, um den SRB 1 während des RRC-Verbindungswiederaufbaus wiederaufzunehmen.

## Revendications

1. Procédé pour effectuer une communication sans fil avec un équipement utilisateur, UE, (100) par une station de base (200), comprenant :
recevoir un message de demande de rétablissement de connexion de commande de ressources radio, RRC, en provenance de l'UE (100) ;
transmettre, à l'UE (100), en réponse au message de demande de rétablissement de connexion RRC, un message de rétablissement de connexion RRC sur un support radio de signalisation 1, SRB 1, le message de rétablissement de connexion RRC étant protégé en intégrité ; et
recevoir un message de rétablissement complet RRC, protégé en intégrité et chiffré par l'UE (100) en réponse au message de rétablissement de connexion RRC, le message de rétablissement complet de connexion RRC étant protégé en intégrité à l'aide d'une première clé et chiffré à l'aide d'une seconde clé,
dans lequel la première clé est une clé K-RRCint et la seconde clé est une clé K-RRCenc.

2. Procédé de la revendication 1, comprenant en outre :
transmettre un message de configuration de connexion RRC à l'UE (100) pour la procédure d'établissement de connexion RRC, si le contexte de l'UE n'est pas vérifié ou récupéré.

3. Procédé de la revendication 1, dans lequel le SRB 1 est repris pendant le rétablissement de connexion RRC.

4. Procédé d'exécution d'une communication sans fil par un équipement utilisateur, UE (100), comprenant :
transmettre, à une station de base (200), un message de demande de rétablissement de connexion de commande de ressources radio, RRC ;
recevoir, à l'UE (100), en réponse au message de demande de rétablissement de connexion RRC provenant de la station de base (200), un message de rétablissement de connexion RRC sur un support radio de signalisation 1, SRB 1, le message de rétablissement de connexion RRC étant protégé en intégrité ; et
transmettre, à la station de base (200), un message de rétablissement complet de connexion RRC, protégé en intégrité et chiffré en réponse au message de rétablissement de connexion RRC, le message de rétablissement complet de connexion RRC étant protégé en intégrité à l'aide d'une première clé et chiffré à l'aide d'une seconde clé,
dans lequel la première clé est une clé K-RRCint et la seconde clé est une clé K-RRCenc.

5. Procédé de la revendication 4, comprenant en outre :
recevoir un message de configuration de connexion RRC de la station de base (200) pour la procédure d'établissement de connexion RRC, si le contexte de l'UE n'est pas vérifié ou récupéré.

6. Procédé de la revendication 4, dans lequel l'UE (100) reprend le SRB 1 pendant le rétablissement de connexion RRC.

7. Station de base (200) pour effectuer une communication sans fil, comprenant :
une mémoire (230) ;
au moins un processeur (240) couplé à la mémoire (230), configuré pour :
recevoir un message de demande de rétablissement de connexion de commande de ressources radio, RRC, en provenance de l'UE (100) ;
transmettre, à l'UE (100), en réponse au message de demande de rétablissement de connexion RRC, un message de rétablissement de connexion RRC sur un support radio de signalisation 1, SRB 1, le message de rétablissement de connexion RRC étant protégé en intégrité ; et
recevoir un message de rétablissement complet RRC, protégé en intégrité et chiffré par l'UE (100) en réponse au message de rétablissement de connexion RRC, le message de rétablissement complet de connexion RRC étant protégé en intégrité à l'aide d'une première clé et chiffré à l'aide d'une seconde clé,
dans laquelle la première clé est une clé K-RRCint et la seconde clé est une clé K-RRCenc.

8. Station de base (200) de la revendication 7, dans laquelle l'au moins un processeur (240) est configuré pour :
transmettre un message de configuration de connexion RRC à l'UE (100) pour la procédure d'établissement de connexion RRC, si le contexte de l'UE n'est pas vérifié ou récupéré.

9. Station de base (200) de la revendication 7, dans laquelle le SRB 1 est repris pendant le rétablissement de connexion RRC.

10. Équipement utilisateur, UE, (100) pour effectuer une communication sans fil, comprenant :
une mémoire (130) ;
au moins un processeur (140) couplé à la mémoire (130), configuré pour :
transmettre, à une station de base (200), un message de demande de rétablissement de connexion de commande de ressources radio, RRC ;
recevoir, à l'UE (100), en réponse au message de demande de rétablissement de connexion RRC provenant de la station de base (200), un message de rétablissement de connexion RRC sur un support radio de signalisation 1, SRB 1, le message de rétablissement de connexion RRC étant protégé en intégrité ; et
rétablir et reprendre le SRB 1 pendant le rétablissement de connexion RRC ; et
transmettre, à la station de base (200), un message de rétablissement complet de connexion RRC, le message de rétablissement complet de connexion RRC étant protégé en intégrité à l'aide d'une première clé et chiffré à l'aide d'une seconde clé,
dans lequel la première clé est une clé K-RRCint et la seconde clé est une clé K-RRCenc.

11. UE (100) de la revendication 10, dans lequel l'au moins un processeur (140) est configuré pour :
recevoir un message de configuration de connexion RRC de la station de base (200) pour la procédure d'établissement de connexion RRC, si le contexte de l'UE n'est pas vérifié ou récupéré.

12. UE (100) de la revendication 10, dans lequel l'au moins un processeur (140) est configuré pour reprendre le SRB 1 pendant le rétablissement de connexion RRC.
